# FASCICULE DE BREVET EUROPEEN

(11) **EP 0 834 098 B1**
(45) Date de publication et mention de la délivrance du brevet: **26.05.1999**
(21) Numéro de dépôt: 96922949.1
(22) Date de dépôt: 19.06.1996
(51) Int. Cl.: G02C 5/00, G02C 5/22

(54) **MONTURE DE LUNETTES**
BRILLENGESTELL
SPECTACLES FRAME

(30) Priorité: 20.06.1995 FR 9507338
(43) Date de publication de la demande: 08.04.1998
(73) Titulaire: Tredoulat, René, 78110 Le Vesinet (FR)
(72) Inventeur: Tredoulat, René, 78110 Le Vesinet (FR)
(74) Mandataire: Intes, Didier Gérard André
(86) Numéro de dépôt international: FR9600944
(87) Numéro de publication internationale: WO9701124

(56) Documents cités:
- EP-A- 0 239 011
- EP-A- 0 354 051
- FR-A- 2 619 934
- FR-A- 2 623 919
- FR-A- 2 716 014
- GB-A- 2 216 283
- US-A- 2 753 762

## Description

La présente invention concerne une monture de lunettes comportant un corps de monture, deux branches, des moyens pour fixer deux verres de lunettes audit corps, et des moyens formant logement, ménagés dans une partie supérieure du corps. Les branches sont susceptibles d'être au moins partiellement insérées dans ces moyens formant logement pour adopter une position de repos dans laquelle elles s'étendent au-dessus des emplacements des deux verres et d'en être extraites pour adopter une position d'utilisation dans laquelle elles s'étendent dans une direction sensiblement perpendiculaire au plan moyen de ce corps. Ces branches sont flexibles et présentent, chacune, une extrémité avant et une extrémité arrière respectivement proche et éloignée du corps de monture en position d'utilisation.

Le plan moyen du corps de monture est sensiblement vertical lorsque l'utilisateur porte les lunettes. De manière générale, les différentes positions et directions des divers éléments de la monture (avant, arrière, vertical, horizontal) sont celles des conditions normales de port de la monture, dans lesquelles les verres sont globalement verticaux, tandis que les branches sont globalement horizontales jusqu'aux oreilles du porteur.

La demande de brevet européen n° 0 354 051 divulgue une monture de ce type, dans laquelle les moyens formant logement sont constitués par deux canaux parallèles, recevant chacun l'une des branches et ménagés dans la barre supérieure de la monture. Même si l'on tente de doter les branches et les tubes de sections aussi réduites que possible, l'encombrement total des moyens formant logement est relativement important et la barre supérieure doit par conséquent être suffisamment épaisse. Par ailleurs, les deux tubes étant parallèles, les sorties des deux branches sont également parallèles et ne sont par conséquent pas alignées selon la direction générale de la barre supérieure de la monture. Il en résulte une dissymétrie puisque les points de raccordement des branches à la monture ne peuvent pas être situés au même niveau, soit horizontalement, soit verticalement.

L'ensemble est donc relativement disgracieux du fait à la fois de l'épaisseur importante de la barre supérieure de la monture et de la dissymétrie.

L'invention se propose de remédier à ces inconvénients en diminuant l'épaisseur de la barre supérieure de la monture et en réalisant une symétrie extérieure parfaite.

Ce but est atteint grâce au fait que les moyens formant logement sont constitués par un tube unique apte à recevoir les deux branches, ce tube étant ménagé dans la partie supérieure du corps de monture, s'étendant, dans une direction dite "transversale", au-dessus des emplacements des deux verres, et présentant deux extrémités opposées ouvertes, respectivement situées à une première et à une deuxième extrémités latérales de la partie supérieure du corps de monture, et que les extrémités avant des branches sont effilées, lesdites branches étant susceptibles de se croiser pour être toutes deux insérées dans ledit tube unique.

Le fait de remplacer les deux tubes de l'art antérieur par un tube unique permet de diminuer l'épaisseur de la partie supérieure de la monture puisque, même si la section intérieure du tube unique est légèrement supérieure à celle de l'un des deux tubes de l'art antérieur, l'épaisseur de la paroi du tube ne se retrouve que deux fois dans la section de la partie supérieure de la monture, quelle que soit la direction considérée dans cette section. En revanche, dans l'art antérieur, dans la direction dans laquelle les deux tubes sont juxtaposés, on devait loger au total quatre fois l'épaisseur d'un tube en plus des dimensions des sections internes des tubes selon cette direction.

Les deux branches devant être insérées dans des sens opposés à l'intérieur du même tube, le risque existe qu'elles ne se gênent mutuellement ou même que l'insertion soit totalement bloquée si les extrémités avant des deux branches viennent en contact de butée l'une avec l'autre. Ce risque est éliminé grâce au fait que, conformément à l'invention, les extrémités avant des deux branches sont effilées. En effet, même si elles se touchent, il est impossible qu'un contact de butée s'instaure et elles sont naturellement déviées l'une par rapport à l'autre, de sorte que leur insertion dans le tube unique s'effectue sans aucun problème.

Les deux branches coulissent donc l'une sur l'autre et viennent naturellement occuper de façon optimale l'espace intérieur du tube. On a ainsi constaté que, pour une section donnée des branches, la section interne du tube unique peut n'être comprise qu'entre 1,3 et 1,7 fois la section de l'un des deux tubes de l'art antérieur.

L'invention sera bien comprise et ses avantages apparaîtront mieux à la lecture de la description détaillée qui suit, d'un mode de réalisation indiqué à titre d'exemple non limitatif. La description se réfère aux dessins annexés sur lesquels :
- la figure 1 est une vue en perspective schématique d'une monture conforme à l'invention,
- la figure 2 est une vue de dessus de la monture de la figure 1,
- la figure 3 est une vue en coupe selon la ligne III-III de la figure 1,
- la figure 4 est une vue partielle en coupe selon la ligne IV-IV de la figure 3,
- les figures 5 et 6 sont respectivement des vues en élévation et de dessus, de la région d'extrémité avant d'une branche de la monture selon l'invention,
- les figures 7 et 8 sont des vues en coupe, respectivement horizontale et verticale, montrant un organe d'articulation de l'une des branches de la monture,
- les figures 9 et 10 sont des vues en coupe, respectivement horizontale et verticale, de l'une des pièces de l'organe d'articulation,
- la figure 11 est une coupe verticale d'une autre pièce de cet organe,
- la figure 12 est une vue de dessus de la pièce de la figure 11, et
- les figures 13, 14 et 15 sont des coupes horizontales montrant l'organe d'articulation dans plusieurs positions angulaires de la branche.

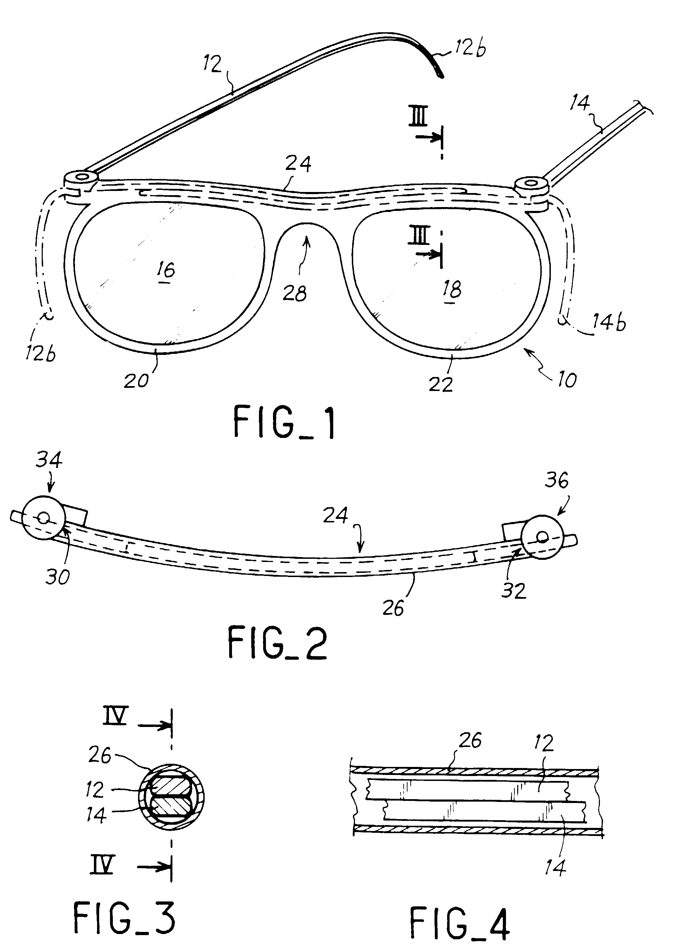

La monture de la figure 1 comporte un corps de monture 10, deux branches 12 et 14, et deux verres de lunettes 16 et 18. Dans l'exemple représenté, cette monture comporte des cerclages de verres classiques 20 et 22, auxquels les verres peuvent être fixés en étant insérés dans des rainures appropriées.

La partie supérieure 24 du corps de la monture comporte des moyens formant logement constitués par un tube unique 26 mieux visible sur les figures 3 et 4. Sur la figure 1, les branches 12 et 14 sont représentées en traits pleins dans leur position d'utilisation, dans laquelle elles sont sensiblement perpendiculaires au plan moyen du corps de monture. Elles sont également représentées en traits mixtes interrompus dans une position de repos, dans laquelle elles sont insérées dans le tube 26 et s'étendent au-dessus des emplacements des deux verres 16 et 18. En fait, elles sont insérées sur pratiquement toute leur longueur, seules leurs parties d'extrémité arrière 12b et 14b, qui viennent se placer derrière les oreilles du porteur de lunettes, restent en dehors du tube.

Le tube 26 est seulement réalisé dans la partie supérieure 24 du corps de monture, de sorte que les cerclages de verre 20 et 22 peuvent être très fins et être réalisés en matière plastique (acétate), en écaille, ou encore en métal. En fait, il n'existe aucune contrainte quant au mode de fixation des verres 16 et 18 au corps de monture 10. Ainsi, les cerclages 20 et 22 ne sont pas obligatoirement présents, puisque les verres peuvent être fixés à l'aide de fils de Nylon insérés dans des rainures de ces verres et fixés à la partie supérieure 24, ou encore être directement fixés sur cette partie supérieure 24 à l'aide de vis les traversant.

Le tube 26 s'étend continûment au-dessus des emplacements des deux verres et au-dessus du pont du nez 28, dans une direction dite "transversale". Il présente deux extrémités opposées 30 et 32, respectivement situées à une première et à une deuxième extrémité latérale de la partie supérieure 24 du corps de monture 10. Les extrémités latérales sont pourvues d'organes d'articulation 34 et 36 pour les branches 12 et 14.

Le tube 26 suit le pont du nez et peut même servir de pont du nez. En fonction de l'esthétique recherchée, il peut présenter, dans cette région, une ondulation vers le bas.

La figure 2 est schématique et ne montre du tube 26 que son contour externe, indiqué par des traits interrompus. On voit que le tube est galbé pour globalement épouser la forme du visage. Ce tube est mieux visible sur les figures 3 et 4. On l'a doté d'une section circulaire, mais il doit être entendu que sa section peut être différente, éventuellement rectangulaire ou ovale. Lorsqu'elles occupent leur position de repos, les deux branches 12 et 14 sont juxtaposées à l'intérieur du tube 26.

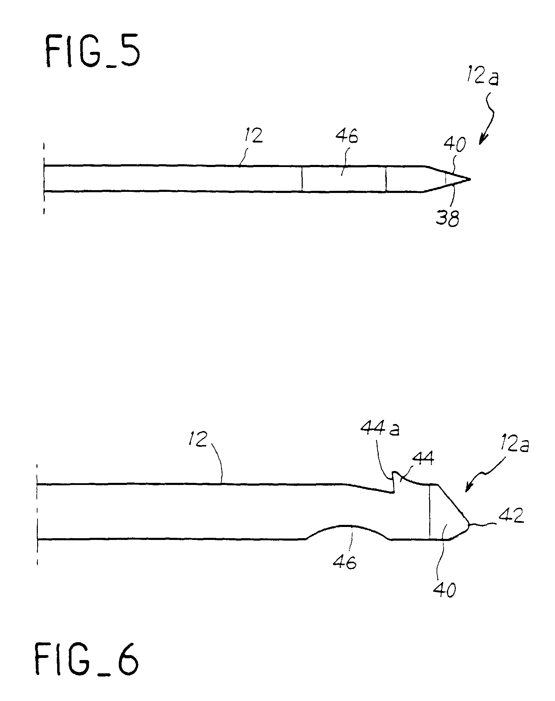

Les figures 5 et 6, montrent, respectivement en élévation et en vue de dessus, la portion d'extrémité avant de la branche 12. On voit sur ces figures que l'extrémité avant 12a est effilée. L'extrémité avant 14a de la branche 14 est évidemment identique. Grâce à cette conformation, même si les extrémités avant 12a et 14a des branches rentrent en contact au cours de leur insertion dans le tube 26, aucun blocage ne peut survenir puisque les branches se dévient mutuellement et viennent naturellement coulisser l'une sur l'autre. Par ailleurs, du fait de leur flexibilité, elles peuvent épouser le galbe ou l'ondulation du tube, sans que leur insertion dans ce tube soit rendue plus difficile.

Plus précisément, on voit sur la figure 5 que l'extrémité avant 12a comporte deux pans inclinés 38 et 40 qui, en élévation, délimitent un dièdre. Dans l'exemple représenté, ces deux pans inclinés sont réalisés sur les deux plus grands côtés de la section des branches. Ils jouent le rôle de rampes qui tendent à dévier les deux branches l'une par rapport à l'autre lorsque leurs extrémités avant entrent en contact.

Le fait de prévoir ces deux rampes peut suffire à dévier les deux branches, et les pans inclinés peuvent effectivement être réalisés comme un dièdre, auquel cas leur ligne d'intersection constitue une arête rectiligne. Toutefois, comme on le voit sur la figure 6, la ligne d'intersection des deux pans inclinés 38 et 40 est globalement concave et présente une pointe saillante 42. Ainsi, la surface frontale des extrémités avant des branches est extrêmement limitée et aucun contact de butée frontale ne peut avoir lieu.

Cette forme particulière de l'extrémité avant des branches peut être obtenue par affûtage, affilage et émorfilage.

Notons encore que l'extrémité avant de la branche 12 comporte un bec 44 présentant une face active 44a dirigée vers l'arrière, et une zone concave 46, dont on précisera l'utilité dans la suite. La branche devant être extrêmement fine, le bec 44 est avantageusement constitué par un simple copeau relevé à l'aide d'un outil approprié. Dans l'exemple représenté, le bec 44 et la zone concave 46 sont réalisés sur deux faces latérales opposées de la branche 12.

Les organes d'articulation 34 et 36 présentent chacun un canal susceptible d'être placé dans une première position dans laquelle il est aligné avec l'extrémité ouverte correspondante du tube 26 et dans une deuxième position sensiblement perpendiculaire à la première. On comprend que, dans la première position du canal, la branche correspondante peut être insérée dans le tube ou extraite hors de ce dernier, et que, dans la deuxième position du canal, la branche correspondante occupe sa position d'utilisation. Les organes d'articulation comprennent, en outre, des moyens de calage de l'extrémité avant de la branche correspondante lorsque cette dernière est extraite du tube.

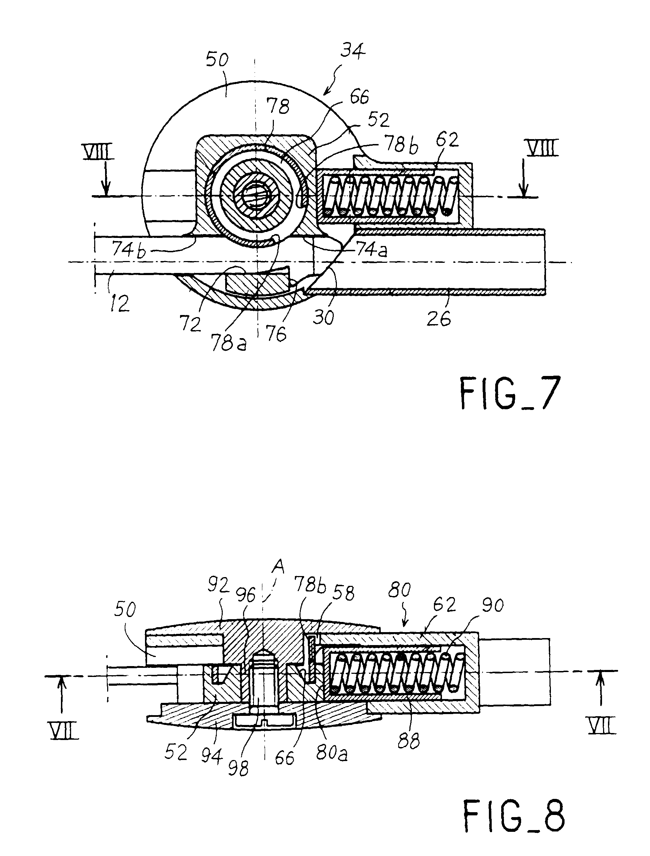

Les organes d'articulation 34 et 36 sont identiques. En référence aux figures 7 à 12, on décrit maintenant plus précisément l'organe 34. Il comporte une base dormante 50 raccordée à l'extrémité 30 du tube 26, et un élément tournant 52, disposé sur la base 50 et susceptible de tourner par rapport à elle autour d'un axe de rotation A.

La base 50 et l'élément 52 peuvent indifféremment être disposés l'un sur l'autre ou l'un sous l'autre, l'essentiel étant qu'ils soient superposés verticalement.

La base 50 de chaque élément tournant est fixée au tube 26 par tout moyen approprié, par exemple par soudure. Les bases 50 et les éléments tournants 52 des organes d'articulation 34 et 36 sont disposés de manière totalement symétrique à chacune des deux extrémités du tube 26, de sorte que les niveaux d'extraction des deux branches sont symétriques.

La figure 7 est une vue en coupe selon la ligne VII-VII de la figure 8, sur laquelle, pour faciliter la compréhension, la branche 12 est représentée en vue extérieure. La figure 8 est une vue en coupe verticale, selon la ligne VIII-VIII de la figure 7.

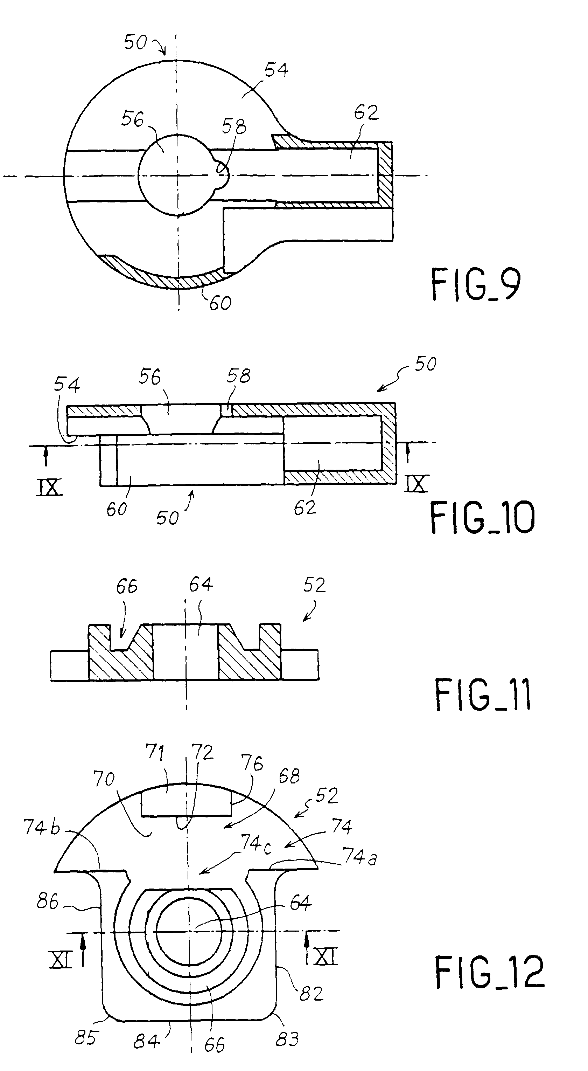

La base dormante 50 est mieux visible sur les figures 9 et 10. Elle comporte une platine horizontale sensiblement circulaire 54 ayant un perçage central 56 présentant un décrochement 58. Elle comporte également une portion de paroi verticale avant 60 et un manchon 62 s'étendant, sensiblement parallèlement au tube 26, à l'arrière de la monture, et ouvert vers l'extérieur. Ce manchon est percé d'un alésage cylindrique.

Les figures 11 et 12 montrent l'élément tournant 52. Il comporte un perçage 64 qui vient s'aligner avec le perçage 56 de la base 50. Le canal 68 qui sert au passage de la branche est ménagé dans une partie excentrée de l'élément tournant 52. Il comporte une face horizontale de base 70 et deux faces latérales 72 et 74. La face 74 est interrompue dans sa partie médiane et comporte deux portions 74a et 74b situées de part et d'autre de cette interruption 74c, qui peut n'être qu'un simple décrochement. Une gorge annulaire 66 concentrique au perçage 64, ouverte vers le haut (vers la platine 54 de la base 50), s'ouvre latéralement, pour une portion de sa circonférence, sur l'interruption 74c de la paroi 74.

L'élément tournant 52 présente également une face de butée 76 sensiblement perpendiculaire à l'une des faces du canal 68 et qui, dans la première position du canal, est dirigé vers l'extrémité 30 du tube 26. Dans l'exemple représenté, la face de butée 76 est perpendiculaire à la face latérale 72 et ménagée dans le même élément de paroi verticale excentré 71. Comme on le voit sur la figure 7, lorsque la branche 12 est extraite du tube 26, la face active 44a de son bec 44 vient coopérer en butée avec la face de butée 76 de l'élément tournant 34 pour définir la position maximale d'extraction de la branche.

Chaque organe d'articulation comporte un organe élastique susceptible de faire saillie dans le canal de l'élément tournant pour coopérer avec la zone concave 46 de la branche correspondante et caler cette dernière dans sa position d'extraction, et d'être escamoté élastiquement pour permettre le coulissement de la branche dans le canal.

Plus précisément, dans l'exemple représenté, l'organe élastique est constitué par une portion d'anneau élastique 78 qui est disposée dans la gorge annulaire 66 et est fixe en rotation. Sous l'effet de son élasticité, cette portion d'anneau 78 tend naturellement à dépasser à l'intérieur du canal 68 en s'insérant dans l'interruption 74c de la paroi 74. Ainsi, lorsque la portion d'anneau 78 est en contact avec la partie courante de la branche, elle s'escamote à l'intérieur de la gorge annulaire 66 et libère le coulissement de la branche à l'intérieur du tube 26. Ce n'est que lorsque la branche est dans sa position d'extraction hors du tube que la portion d'anneau 78 vient coopérer avec la zone concave 46 sous l'effet de son élasticité.

Comme on le voit sur la figure 7, la portion d'anneau 78 a une extrémité libre 78a qui est angulairement proche de l'extrémité 30 du tube 26 et une extrémité fixe 78b qui est angulairement éloignée de cette extrémité 30. En d'autres termes, à partir de son extraction hors du tube et au cours de sa rotation devant l'amener dans sa position d'utilisation, la branche vient d'abord au contact de la portion d'anneau 78 au voisinage de son extrémité libre 78a et se rapproche peu à peu de l'extrémité fixe 78b. L'extrémité 78b est relevée par rapport au plan moyen de la portion d'anneau 78 et vient se loger dans le décrochement 58 du perçage central 56 de la base dormante 50, ce qui permet de rendre la portion d'anneau 78 fixe en rotation.

La coopération des faces de butée 76 et 44a permet d'éviter l'extraction totale de la branche hors du reste de la monture, et la coopération de la zone concave 46 et de la portion d'anneau 78 permet, lorsque la branche est alignée avec le tube, d'opposer une légère résistance à l'insertion de la branche dans le tube. La raideur de la portion d'anneau 78 augmente depuis son extrémité libre 78a jusqu'à son extrémité fixe 78b. Ainsi, au fur et à mesure que la branche tourne pour adopter sa position d'utilisation, la résistance à un déplacement tendant à désengager les faces de butée 76 et 44a augmente. Ceci permet d'éviter tout coulissement intempestif de la branche par rapport au canal 68 lorsqu'elle est extraite du tube. L'élément de paroi verticale 60 de la base 50 qui empêche la branche 12 de sortir de l'élément d'articulation en position d'utilisation n'est donc pas obligatoirement présent.

De plus, comme on le voit sur la figure 15, les branches peuvent adopter une troisième position dans laquelle elles sont repliées à l'arrière de la monture. Dans cette troisième position, aucun élément de paroi verticale ne vient faire obstacle à un coulissement de la branche vers l'extérieur de l'organe d'articulation. Dans cette troisième position, la zone concave 46 est en contact avec une partie du ressort 78 qui présente une forte raideur, de sorte qu'il est très difficile de faire sortir l'extrémité avant de la branche hors de l'organe d'articulation.

Le manchon 62 de la base 50 sert de cylindre à un piston élastique 80 ayant une extrémité active 80a. Au cours de la rotation de la branche, cette extrémité active 80a coopère successivement avec les faces latérales planes, dirigées verticalement, de l'organe tournant 52. De manière générale, cet organe tournant comporte au moins une première et une deuxième faces latérales planes 82 et 84 perpendiculaires et adjacentes.

La coopération du piston et des faces actives sert à définir les différentes positions de la branche. Ainsi, l'extrémité active 80a du piston coopère avec la première face latérale 82 de l'organe 52 pour définir la position dans laquelle la branche 12 est alignée avec le tube 26. Pour passer à la position d'utilisation des branches, le piston est sollicité en compression, qui est maximale lorsque sa face active coopère avec l'angle arrondi 83 entre les faces 82 et 84. Lorsque la face active du piston coopère avec la deuxième face latérale 84, la position d'utilisation est définie et les branches ne risquent pas d'être écartées ou ramenées vers l'intérieur de façon intempestive.

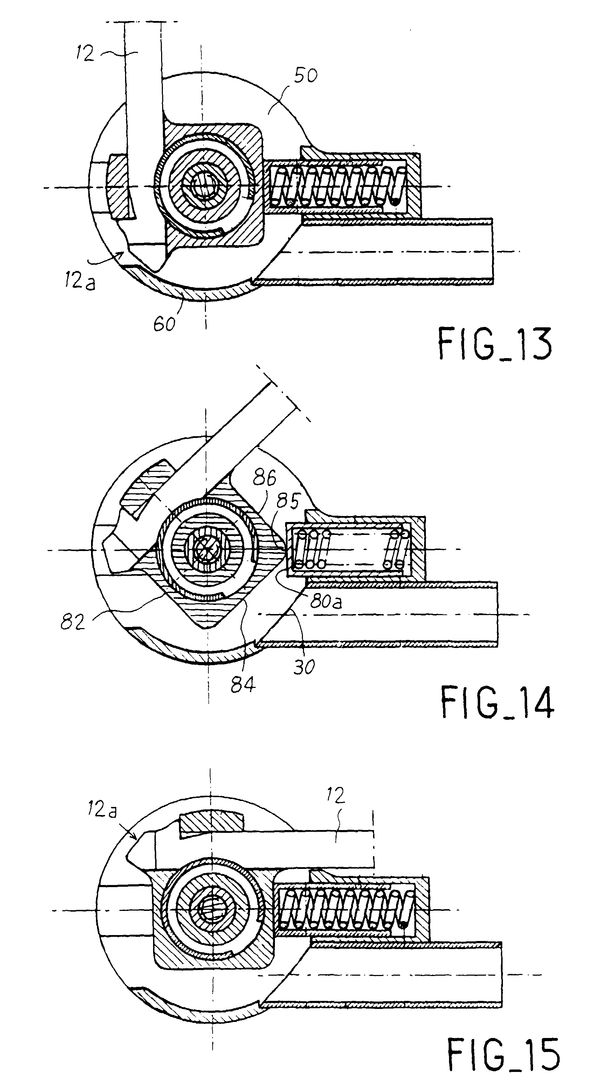

Lorsque, comme c'est le cas dans l'exemple représenté, les branches peuvent adopter la troisième position dans laquelle elles sont repliées à l'arrière de la monture, l'élément tournant 52 comporte une troisième face latérale plane et verticale 86 parallèle à la face 82 et adjacente à la face 84. L'extrémité active 80a du piston 80 vient coopérer avec cette troisième face pour définir la troisième position de la branche. La figure 14 montre le passage de la branche 12 entre sa position d'utilisation (figure 13) et sa positon repliée (figure 15), au cours duquel l'extrémité active 80a du piston coopère avec l'angle arrondi 85 qui sépare les faces 84 et 86.

Dans l'exemple représenté, le piston comporte un embout 88, dont l'extrémité libre constitue la face active 80a, et qui est disposé dans le manchon 62. Un ressort de compression 90 est interposé entre le fond du manchon et l'embout 88, et est avantageusement logé dans un alésage de ce dernier.

Il faut noter que le piston est réalisé à l'arrière de la monture et adjacent au tube 26 pour être masqué lorsque l'utilisateur porte des lunettes. Cette disposition n'est toutefois pas obligatoire.

Pour solidariser entre elles les différentes pièces de chaque organe d'articulation, ces derniers comportent deux flasques 92 et 94 qui jouent le rôle de couvercles inférieur et supérieur, le flasque 92 étant placé contre la base 50 et le flasque 94 étant placé contre la face de l'élément tournant opposée à la base 50. L'un des deux flasques, par exemple le flasque 92, comporte un manchon étagé qui vient se loger dans le perçage de la base 50 et dans celui, de diamètre plus réduit, de l'élément tournant 52. Ce manchon 96 est fileté et les deux flasques sont solidarisés à l'aide d'une vis 98 qui les empêche de tourner l'un par rapport à l'autre, l'extrémité libre du manchon 96 venant en contact avec la face en regard du flasque 94.

## Revendications

1. Monture de lunettes comportant un corps de monture (10), deux branches (12, 14), des moyens pour fixer deux verres de lunettes (16, 18) audit corps, et un tube unique (26) ménagé dans une partie supérieure (24) du corps, les branches (12, 14) étant susceptibles d'être au moins partiellement insérées dans ledit tube (26) pour adopter une position de repos dans laquelle elles s'étendent au-dessus des emplacements des deux verres (16, 18) et d'en être extraites pour adopter une position d'utilisation dans laquelle elles s'étendent dans une direction sensiblement perpendiculaire au plan moyen de ce corps (10), ces branches étant flexibles et présentant, chacune, une extrémité avant et une extrémité arrière (12b, 14b) respectivement proche et éloignée du corps de monture en position d'utilisation, le tube (26) s'étendant, dans une direction dite "transversale", au-dessus des emplacements des deux verres (16, 18) et présentant deux extrémités opposées ouvertes (30, 32), respectivement situées à une première et à une deuxième extrémités latérales de la partie supérieure (24) du corps de monture (10),
caractérisée en ce que les extrémités avant (12a, 14a) des branches (12, 14) sont effilées, lesdites branches étant susceptibles de se croiser pour être toutes deux insérées dans ledit tube unique (26).

2. Monture selon la revendication 1, caractérisée en ce que les extrémités avant (12a, 14a) des branches (12, 14) présentent, chacune, deux pans inclinés (38, 40) délimitant un dièdre.

3. Monture selon la revendication 2, caractérisée en ce que, pour chaque branche (12, 14), la ligne d'intersection des deux pans inclinés (38, 40) présente une pointe saillante (42).

4. Monture selon l'une quelconque des revendications 1 à 3, caractérisée en ce qu'elle comporte un premier et un deuxième organes d'articulation (34, 36) respectivement situés à la première et à la deuxième extrémités latérales de la partie supérieure (24) du corps (10) de monture, chacun de ces organes présentant un canal (68), susceptible d'être placé dans une première position dans laquelle il est aligné avec l'extrémité correspondante (30, 32) du tube (26) et dans une deuxième position sensiblement perpendiculaire à la première, et comprenant des moyens de calage de l'extrémité avant (12a, 14a) de la branche (12, 14) correspondante lorsque cette dernière est extraite du tube (26).

5. Monture selon la revendication 4, caractérisée en ce que chaque organe d'articulation (34, 36) comporte une base dormante (50) raccordée à l'extrémité correspondante du tube et un élément tournant (52), disposé sur ladite base (50) et susceptible de tourner par rapport à elle autour d'un axe de rotation (A), le canal (68) présentant une face de base (70) et deux faces latérales (72, 74), et étant ménagé dans cet élément tournant, ce dernier présentant une face de butée (76) sensiblement perpendiculaire à l'une des faces (72) du canal (68) et dirigée vers l'extrémité correspondante (30, 32) du tube (26) dans la première position du canal, et en ce que l'extrémité avant de chaque branche présente un bec (44) ayant une face active (44a) dirigée vers l'arrière et susceptible de coopérer en butée avec la face de butée (76) de l'élément tournant correspondant.

6. Monture selon la revendication 5, caractérisée en ce que chaque branche (12, 14) présente une zone concave (46) au voisinage de son extrémité avant (12a, 14a), et en ce que chaque organe d'articulation (52) comporte un organe élastique (78) susceptible de faire saillie dans le canal (68) de l'élément tournant (52) pour coopérer avec la zone concave (46) de la branche (12, 14) correspondante et caler cette dernière dans sa position d'extraction, et d'être escamoté élastiquement pour permettre le coulissement de la branche dans le canal.

7. Monture selon la revendication 6, caractérisé en ce que l'élément tournant (52) comporte une gorge annulaire (66) centrée sur l'axe de rotation (A), et en ce que l'organe élastique est constitué par une portion d'anneau élastique (78), disposée dans ladite gorge (66) et fixe en rotation, ledit organe ayant une extrémité libre (78a) angulairement proche de l'extrémité correspondante (30, 32) du tube (26), et une extrémité fixe (78b) angulairement éloignée de cette extrémité correspondante.

8. Monture selon l'une quelconque des revendications 5 à 7, caractérisée en ce que l'élément tournant (52) de chaque organe d'articulation (34, 36) présente au moins une première (82) et une deuxième (84) faces latérales planes perpendiculaires et adjacentes, et en ce que chaque organe d'articulation (34, 36) comporte un piston élastique (80) ayant une extrémité active (80a) susceptible de coopérer avec l'une ou l'autre desdites faces latérales planes (82, 84) pour définir l'une ou l'autre des positions de la branche correspondante.

9. Monture selon la revendication 8, caractérisée en ce que l'élément tournant de chaque organe d'articulation présente une troisième face latérale plane (86), parallèle à la première (82) et adjacente à la deuxième (84), et en ce que l'extrémité active (80a) du piston (80) est susceptible de coopérer avec cette troisième face (86) pour définir une troisième position de la branche correspondante, dans laquelle cette dernière est repliée sur le côté arrière de la monture.

10. Monture selon l'une quelconque des revendications 8 et 9, caractérisée en ce que chaque piston (80) comporte un embout (88) disposé à coulissement dans un cylindre (62) qui fait corps avec la base dormante (50), et un ressort de compression (90) logé dans le cylindre.

## Patentansprüche

1. Brillenfassung mit einem Fassungskörper (10), zwei Bügeln (12, 14), Einrichtungen zum Befestigen zweier Brillengläser (16, 18) am Körper und einem in einem oberen Teil (24) des Körpers angeordneten Einzelrohr (26), wobei die Bügel (12, 14) zumindest teilweise in das Rohr (26) einschiebbar sind, um eine Ruheposition einzunehmen, in welcher sie sich über den Stellen, wo sich die beiden Gläser (16, 18) befinden, erstrecken, und aus diesem herausziehbar sind, um eine Gebrauchsposition einzunehmen, in welcher sie sich in einer zur Mittelebene dieses Körpers (10) im wesentlichen senkrechten Richtung erstrecken, wobei die Bügel nachgiebig sind und jeweils ein vorderes und ein hinteres Ende (12b, 14b) aufweisen, welche sich in der Gebrauchsposition nahe beim Fassungskörper bzw. entfernt von diesem befinden, und wobei sich das Rohr (26) in einer sogenannten "Querrichtung" oberhalb der Stellen, wo sich die beiden Gläser (16, 18) befinden, erstreckt und zwei an einem ersten bzw. an einem zweiten seitlichen Ende des oberen Teils (24) des Fassungskörpers (10) befindliche entgegengesetzte offene Enden (30, 32) aufweist, dadurch gekennzeichnet, daß die vorderen Enden (12a, 14a) der Bügel (12, 14) sich verjüngen, wobei sich die Bügel begegnen können, um alle beide in das Einzelrohr (26) eingeschoben zu werden.

2. Fassung nach Anspruch 1, dadurch gekennzeichnet, daß die vorderen Enden (12a, 14a) der Bügel (12, 14) jeweils zwei einen V-Winkel einschließende, geneigte Flächen (38, 40) aufweisen.

3. Fassung nach Anspruch 2, dadurch gekennzeichnet, daß die Schnittlinie der beiden geneigten Flächen (38, 40) bei jedem Bügel (12, 14) eine vorstehende Spitze (42) aufweist.

4. Fassung nach einem der Ansprüche 1 bis 3, dadurch gekennzeichnet, daß sie ein erstes und ein zweites Anlenkorgan (34, 36) umfaßt, welche am ersten bzw. am zweiten seitlichen Ende des oberen Teils (24) des Fassungskörpers (10) angeordnet sind und von denen jedes einen Kanal (68), der in eine erste Position, in welcher er mit dem entsprechenden Ende (30, 32) des Rohrs (26) fluchtet, und in eine zweite, zur ersten im wesentlichen senkrechte Position bringbar ist, und Einrichtungen zur Einstellung des vorderen Endes (12a, 14a) des entsprechenden Bügels (12, 14), wenn dieser aus dem Rohr (26) herausgezogen ist, aufweist.

5. Fassung nach Anspruch 4, dadurch gekennzeichnet, daß jedes Anlenkorgan (34, 36) eine am entsprechenden Ende des Rohrs angeordnete ruhende Basis (50) und ein auf dieser Basis (50) angeordnetes und gegenüber dieser um eine Rotationsachse (A) drehbar gelagertes Drehelement (52) aufweist, wobei der Kanal (68) eine Grundfläche (70) und zwei Seitenflächen (72, 74) aufweist und in diesem Drehelement angeordnet ist, wobei letzteres eine zu einer der Seitenflächen (72) des Kanals (68) im wesentlichen senkrechte und in der ersten Position des Kanals zum entsprechenden Ende (30, 32) des Rohrs (26) gerichtete Anschlagfläche (76) aufweist, und daß das vordere Ende jedes Bügels eine Nase (44) mit einer nach hinten gerichteten aktiven Fläche (44a), die mit der Anschlagfläche (76) des entsprechenden Drehelements im Anschlag zusammenwirken kann, aufweist.

6. Fassung nach Anspruch 5, dadurch gekennzeichnet, daß jeder Bügel (12, 14) in der Nähe seines vorderen Endes (12a, 14a) einen konkaven Bereich (46) aufweist und jedes Anlenkorgan (52) ein elastisches Element (78) besitzt, welches in den Kanal (68) des Drehelements (52) zwecks Zusammenwirkens mit dem konkaven Bereich (46) des entsprechenden Bügels (12, 14) und Blockierens desselben in seiner herausgezogenen Position ragen kann und zur Ermöglichung des Gleitens des Bügels in dem Kanal elastisch ein- und ausziehbar ist.

7. Fassung nach Anspruch 6, dadurch gekennzeichnet, daß das Drehelement (52) eine an der Rotationsachse (A) zentrierte Ringnut (66) aufweist und daß das elastische Element durch einen in der Nut (66) befindlichen und rotationsgesicherten elastischen Ringabschnitt (78) gebildet ist, wobei das Element ein winkelmäßig nahe dem entsprechenden Ende (30, 32) des Rohrs (26) befindliches freies Ende (78a) und ein von diesem entsprechenden Ende winkelmäßig entferntes freies Ende (78b) aufweist.

8. Fassung nach einem der Ansprüche 5 bis 7, dadurch gekennzeichnet, daß das Drehelement (52) jedes Anlenkorgans (34, 36) mindestens eine erste (82) und eine zweite (84) plane, senkrechte Seitenfläche, die aneinandergrenzen, aufweist und jedes Anlenkorgan (34, 36) einen elastischen Kolben (80) mit einem aktiven Ende (80a) umfaßt, welcher zwecks Festlegung der einen oder der anderen Position des entsprechenden Bügels mit der einen oder der anderen planen Seitenfläche (82, 84) zusammenwirken kann.

9. Fassung nach Anspruch 8, dadurch gekennzeichnet, daß das Drehelement jedes Anlenkorgans eine zur ersten Seitenfläche (82) parallele und an die zweite Seitenfläche (84) angrenzende dritte plane Seitenfläche (86) aufweist und das aktive Ende (80a) des Kolbens (80) zwecks Festlegung einer dntten Position des entsprechenden Bügels, in welcher letzterer über die Rückseite der Fassung umgeklappt ist, mit dieser dritten Seitenfläche (86) zusammenwirken kann.

10. Fassung nach einem der Ansprüche 8 und 9, dadurch gekennzeichnet, daß jeder Kolben (80) ein in einem mit der ruhenden Basis (50) einstückig ausgebildeten Zylinder (62) gleitend gelagertes Ansatzstück (88) und eine im Zylinder angeordnete Druckfeder (90) aufweist.

## Claims

1. Spectacles frame comprising a frame body (10), two side arms (12, 14), means for fixing two spectacles lenses (16, 18) to said body, and a single tube (26) arranged in the upper portion (24) of the body, the side arms (12, 14) being capable of being at least partially inserted in said tube (26) in order to adopt a position of rest in which they extend above the locations of the two lenses (16, 18), and of being extracted therefrom in order to adopt a position of use, in which they extend in a direction substantially perpendicular to the mean plane of this body (10), these side arms being flexible and each presenting a front end and a rear end (12b, 14b) respectively near to and remote from the frame body in position of use, the tube (26) extending, in a so-called « transverse » direction, above the locations of the two lenses (16, 18) and presenting two open opposite ends (30, 32) respectively located at a first and a second lateral end of the upper portion (24) of the frame body (10),
characterised in that the front ends (12a, 14a) of the side arms (12, 14) are tapered, said side arms being capable of crossing each other in order to be both inserted in said single tube (26).

2. The frame according to claim 1, characterised in that the front ends (12a, 14a) of the side arms (12, 14) each present two inclined faces (38, 40) defining a dihedron.

3. The frame according to claim 2, characterised in that, for each side arm (12, 14), the line of intersection of the two inclined faces (38, 40) presents a projecting tip (42).

4. The frame according to any one of claims 1 to 3, characterised in that it comprises a first and a second articulation member (34, 36) respectively located at the first and at the second lateral end of the upper portion (24) of the frame body (10), each of these members presenting a channel (68) capable of being placed in a first position in which it is aligned with the corresponding end (30, 32) of the tube (26) and in a second position substantially perpendicular to the first, and comprising means for wedging the front end (12a, 14a) of the corresponding side arm (12, 14) when this latter is extracted from the tube (26).

5. The frame according to claim 4, characterised in that each articulation member (34, 36) comprises a fixed base (50) connected to the corresponding end of the tube and a rotating element (52) disposed on said base (50) and capable of rotating with respect thereto about an axis of rotation (A), the channel (68) presenting a base face (70) and two lateral faces (72, 74), and being arranged in this rotating element, the latter presenting an abutment face (76) substantially perpendicular to one of the faces (72) of the channel (68) and directed towards the corresponding end (30, 32) of the tube (26) in the first position of the channel, and in that the front end of each side arm presents a break (44) having an active face (44a) directed towards the rear and capable of cooperating in abutment with the abutment face (76) of the corresponding rotating element.

6. The frame according to claim 5, characterised in that each side arm (12, 14) presents a concave zone (46) in the vicinity of its front end (12a, 14a), and in that each articulation member (52) comprises an elastic member (78) capable of projecting in the channel (68) of the rotating element (52) in order to cooperate with the concave zone (46) of the corresponding side arm (12, 14) and to wedge this latter in its position of extraction, and of being elastically retracted to allow the side arm to slide in the channel.

7. The frame according to claim 6, characterised in that the rotating element (52) comprises an annular groove (66) centred on the axis of rotation (A), and in that the elastic member is constituted by a portion of elastic ring (78), disposed in said groove (66) and fixed in rotation, said member having a free end (78a) angularly close to the corresponding end (30, 32) of the tube (26), and a fixed end (78b) angularly remote from this corresponding end.

8. The frame according to any one of claims 5 to 7, characterised in that the rotating element (52) of each articulation member (34, 36) presents at least first (82) and second (84) plane lateral faces which are perpendicular and adjacent, and in that each articulation member (34, 36) comprises an elastic piston (80) having an active end (80a) capable of cooperating with one or the other of said plane, lateral faces (82, 84) in order to define one or the other of the positions of the corresponding side arm.

9. The frame according to claim 8, characterised in that the rotating element of each articulation member presents a third plane lateral face (86), parallel to the first (82) and adjacent the second (84), and in that the active end (80a) of the piston (80) is capable of cooperating with this third face (86) to define a third position of the corresponding side arm, in which the latter is folded on the rear side of the frame.

10. The frame according to any one of claims 8 and 9, characterised in that each piston (80) comprises a cap (88) slidably disposed in a cylinder (62) which is integral with the fixed base (50), and a compression spring (90) housed in the cylinder.
